# EUROPEAN PATENT SPECIFICATION

(11) **EP 3 085 048 B1**
(45) Date of publication and mention of the grant of the patent: **26.05.2021**
(21) Application number: 14802385.6
(22) Date of filing: 18.11.2014
(51) Int. Cl.: H04L 29/06

(54) **SESSION CONTINUITY APPARATUS**
SITZUNGSKONTINUITÄTSVORRICHTUNG
APPAREIL À CONTINUITÉ DE SESSION

(30) Priority: 18.12.2013 GB 201322355
(43) Date of publication of application: 26.10.2016
(73) Proprietor: HERE Global B.V., 5611 ZT Eindhoven (NL)
(72) Inventor: HOLTMANNS, Silke, FI-01800 Klaukkala (FI); TUUKKANEN, Marko, 14913 Schlenzer (DE)
(74) Representative: Potter Clarkson
(86) International application number: PCT/EP2014/074817
(87) International publication number: WO 2015/090783

(56) References cited:
- US-A1- 2007 115 933
- US-A1- 2007 275 725
- US-A1- 2013 318 249

## Description

### Field

The present application relates to a computer-implemented method, apparatuses, computer program products and a system for realising session continuity between a first apparatus and a second apparatus. For instance, the first apparatus and second apparatus may be respectively an embedded navigation apparatus and a mobile device.

### Background

There is currently an increasing implementation of embedded navigation systems within vehicles, for example cars, trucks etc. These embedded navigation systems permit the driver to concentrate on the act of driving rather than navigating in unknown or little known areas. These embedded navigation systems can also be deployed for semi or autonomous machines.

The previous generation embedded navigation systems however have limited use in that the mapping information becomes out-of-date quickly and there are significant problems in updating the mapping information as it typically requires expensive physical media and a good data connection (or physical access) to update mapping information. Furthermore a lack of connectivity can lead to the embedded navigation system being unable to cope with dynamically changing road conditions e.g. due to weather or traffic situation.

Current generation embedded navigation systems typically have a greater degree of connectivity. Some of the embedded navigation systems such as HERE Auto can be configured to run navigation and/or other service applications which communicate over communications networks such as the cellular wireless communications network to provide a full and rich navigation experience. For example dynamic routing in response to changing road conditions can be performed by communicating with a navigation server monitoring other vehicles on the road network. In such situations user data and general information can be stored on a cloud service such that the user can retrieve the navigation information in more than one vehicle. In some cases a local copy can be generated where the data can be encrypted for user privacy and anti-theft reasons. In such systems the user has access to services and consumes content from the servers (or generally the 'cloud') when the user signs in/logs in to the navigation unit. This navigation information can comprise favourites, personal information, locations, recently visited places, routes, and potentially payment information. Furthermore it is envisaged that the information can comprise, e-mails or social network entries which can be read-out to the user while they are driving. Furthermore current embedded navigation systems can be configured to communicate with mobile devices running companion applications. These mobile device companion applications can also be configured to log on or sign in to the server or servers and perform similar operations to the embedded navigation unit when the user is away from the vehicle. To protect the security of the private data, the user is required to login and potentially restart a session if they leave the vehicle, even if they are only posting a letter in a letter box.

US 2013/0318249 A1 relates to methods and apparatus for transferring communication sessions between a plurality of computing devices. A first computing device, which has established a first communication session with a remote computing device, detects the presence of and establishes a wireless connection with a second computing device. The second device receives, from the first device, information associated with the first communication session, and uses this information to establish a second communication session with the same state as the first session.

### Summary

According to a first aspect there is provided a method according to claim 1, with embodiments as defined in claims 2 to 10.

Transferring session information between the first apparatus and the second apparatus over the connection between the first apparatus and the second apparatus may comprise: generating a token, wherein the token is associated with at least one timer period; transmitting periodically the token from the first apparatus to the second apparatus.

Transferring session information between the first apparatus and the second apparatus over the connection between the first apparatus and the second apparatus may further comprise: receiving the token at the second apparatus; storing the token in the second apparatus; generating a token acknowledgement; transmitting the token acknowledgement to the first apparatus.

Transferring session information between the first apparatus and the second apparatus over the connection between the first apparatus and the second apparatus may further comprise: receiving the token acknowledgement at the first apparatus; verifying the token acknowledgement is received within the time period; resetting the time period.

The method may further comprise: determining a time period expiration; closing the secure session.

Determining that the second apparatus is no longer in proximity of the first apparatus may comprise at least one of: determining the absence of a token acknowledgement; and determining the absence of the connection between the first apparatus and the second apparatus.

The method may further comprise receiving at least one sensor information determining the absence of at least one of: the second apparatus; and a user of the second apparatus.

The method may further comprise following the determination that the second apparatus is no longer in proximity of the first apparatus: determining the presence of the second apparatus in proximity of the first apparatus; restarting the secure session at the first apparatus; stopping the secure session at the second apparatus.

Connecting the first apparatus to at least one further apparatus configured to provide service information to the first apparatus may comprise: determining that the second apparatus is connected to the at least one further apparatus; transferring at least one credential from the second apparatus to the first apparatus; connecting the first apparatus to the at least one further apparatus based on the at least one credential.

The service information may comprise at least one of: navigation data associated with at least one of the first and second apparatus; configuration data for a vehicle associated with the first apparatus, wherein the first apparatus comprises an embedded unit within the vehicle; configuration data for a vehicle entertainment system wherein the first apparatus comprises an embedded vehicle entertainment system; configuration data for a vehicle control system, wherein the first apparatus comprises an embedded unit within the vehicle.

According to a second aspect there is provided a first apparatus according to claim 11.

Transferring session information between the first apparatus and the second apparatus over the connection between the first apparatus and the second apparatus may cause the first apparatus to: generate a token, wherein the token is associated with at least one timer period; transmit periodically the token from the first apparatus to the second apparatus.

Transferring session information between the first apparatus and the second apparatus over the connection between the first apparatus and the second apparatus may further cause the first apparatus to: receive the token acknowledgement at the first apparatus; verify the token acknowledgement is received within the time period; reset the time period.

The first apparatus may be further caused to: determine a time period expiration; close the secure session.

Determining that the second apparatus is no longer in proximity of the first apparatus may comprise the first apparatus performing at least one of: determining the absence of a token acknowledgement; and determining the absence of the connection between the first apparatus and the second apparatus.

Determining that the second apparatus is no longer in proximity of the first apparatus comprises receiving at least one sensor information determining the absence of at least one of: the second apparatus; and a user of the second apparatus. Connecting the first apparatus to the at least one further apparatus configured to provide service information to the first apparatus may comprise the first apparatus: determining that the second apparatus is connected to the at least one further apparatus; transferring at least one credential from the second apparatus to the first apparatus; and connecting the first apparatus to the at least one further apparatus based on the at least one credential.

The service information may comprise at least one of: navigation data associated with at least one of the first apparatus and the second apparatus; configuration data for a vehicle associated with the first apparatus, wherein the first apparatus comprises an embedded unit within the vehicle; configuration data for a vehicle entertainment system wherein the first apparatus comprises an embedded vehicle entertainment system; configuration data for a vehicle control system, wherein the first apparatus comprises an embedded unit within the vehicle.

According to a third aspect there is provided a second apparatus according to claim 12.

Transferring session information between the second apparatus and the first apparatus over the connection between the second apparatus and the first apparatus may further cause the second apparatus to: receive the token at the second apparatus; store the token in the second apparatus; generate a token acknowledgement; transmit the token acknowledgement to the first apparatus. Determining that the first apparatus is no longer in proximity of the second apparatus may comprisethe second apparatus performing at least one of: determining the absence of a token from the first apparatus; and determining the absence of the connection between the first apparatus and the second apparatus.

The second apparatus, following the determination that the first apparatus is no longer in proximity of the second apparatus, may be further caused to: determine the presence of the first apparatus in proximity of the second apparatus; and stop the secure session at the second apparatus.

The service information may comprise at least one of: navigation data associated with at least one of the first apparatus and the second apparatus; configuration data for a vehicle associated with the first apparatus, wherein the first apparatus comprises an embedded unit within the vehicle; configuration data for a vehicle entertainment system wherein the first apparatus comprises an embedded vehicle entertainment system; configuration data for a vehicle control system, wherein the first apparatus comprises an embedded unit within the vehicle.

The second apparatus may be a mobile device.

According to other aspects of the invention, there is provided a computer program product according to claim 13, a computer program product according to claim 14, and a system according to claim 15.

An electronic device may comprise apparatus as described herein.

Embodiments of the present application aim to address problems associated with the state of the art.

### Summary of the Figures

For better understanding of the present application, reference will now be made by way of example to the accompanying drawings in which:
Figure 1 shows schematically a system employed in some embodiments;
Figure 2 shows schematically a second apparatus employed in some embodiments in further detail;
Figure 3 shows schematically a flow diagram of the interactions and operations for transferring session information according to some embodiments;
Figure 4 shows schematically a flow diagram of the interactions and operations relating to an established session following the determination of absence of a mobile device, as second apparatus, according to some embodiments;
Figure 5 shows schematically a flow diagram of the interactions and operations for re-establishment of the session having determined absence and then presence of a mobile device, as second apparatus, according to some embodiments;
Figure 6 shows schematically a flow diagram of the interactions and operations of the first apparatus for log-on to an application server, as further apparatus, according to some embodiments;
Figure 7 shows schematically a flow diagram of the interactions and operations for resuming a session on a mobile device, as second apparatus, following the determination of absence of the mobile device according to some embodiments; and
Figure 8 shows schematically a flow diagram of the interactions and operations for transferring session information between apparatus according to some embodiments.

### Embodiments

The following describes in further detail suitable apparatus and possible mechanisms for the provision of synchronizing and transferring security sessions between a second apparatus, being for instance a mobile terminal or mobile device, and a first apparatus, being for instance an embedded navigation unit such as located within a car or vehicle or machine generally.

In the following examples the handover (synchronizing and transferring security sessions) is based on a proximity (or lack of) between the first and second apparatus and relates to user created security sessions.

As described herein embedded navigation units, as first apparatus, such as located within a car or vehicle, are generally configured to access service applications (such as navigation and/or other services) from a further apparatus, being for instance remote servers. For privacy and security reasons, the service content can only be used after signing in. In other words the service content can only be accessed after establishment of a secure session. Usually, each device has its own session with a server, but this is a problem when a user wants to "switch" devices without doing a new sign-in.

Furthermore due to privacy and security requirements typically a user is signed off or logged off from the remote server (such as for example a HERE cloud services server and/or other third party services servers that may be routed via HERE cloud servers) in the embedded navigation unit when the car is turned off. This generally means, that even if the user is only stopping for a short time, for example to park the car and visit an ATM or picking up a friend, the user is required to sign or log into the services again. Furthermore any active services that were running prior to the turning off the car (such as navigation processes) are interrupted and are required to be restarted once the user has logged or signed in. The user for example may leave the car running to avoid signing in again, which is environmentally not good and may lead to increased car thefts e.g. in front of pick-up points like Pizza restaurants.

This is inconvenient for the user and also a safety issue, since this behaviour would encourage a user to attempt to log or sign in (and therefore type in their user name and password) when they are already driving in order to reduce their stationary time (or where the user forgets to sign in when getting back into the vehicle and only remembering when driving). In some circumstances stopping is not a desired or legal option.

The concept as addressed in the embodiments described herein is to prevent frequent sign-in requests.

Furthermore the concept as addressed in the embodiments described herein is discussed with respect to the following:
a. a first apparatus, being for instance an embedded navigation unit in the car (such as HERE Auto) which is connected to a further apparatus, being for instance a service server(s), and
b. a second apparatus, being for instance a mobile device performing a mobile application (such as HERE Auto Companion) which the user uses outside the car. In the following description the mobile application is called a companion application,

There have been attempts to reduce the number of log in/sign in attempts by caching the session in the embedded navigation unit, but security issues would prevent the unit staying "open" when the user is not present. Thus in such circumstances the user would need to sign in to the embedded navigation unit. So even with that approach, when the session "rests" a new sign-in procedure is required and the usability problem remains.

Storing passwords, or transmitting the passwords in an encrypted form from the mobile device to the embedded navigation unit is thus not generally believed to be a secure solution as many embedded navigation units do not introduce good enough security or encryption to allow storing of passwords securely. For example generally the hardware of navigation units follows consumer electronics partially because the hardware of embedded unit is expected to last several years longer than the expected lifetime of multi-purpose consumer electronics and has to be designed to live in a much harsher environment than multi-purpose consumer electronics, such as an average mobile device. As such the computing and security capabilities of such embedded navigation units are not for general purpose applications, like average mobile devices. Therefore the computing and security power of embedded navigation units are not expected to perform at the same level as current multi-purpose consumer electronics.

The embodiments described herein outline handing over secure sessions between two units, where each unit has its own cellular or other wireless connectivity. In particular, this relates to application or web based secure sessions, or in general on continuing security sessions without need for the user to sign in again. The embodiments described herein thus outline a mechanism on how to re-login or sign in (continue a security session) with a further apparatus, for instance a server, (which may operate within the 'cloud') and recover the security session after shortly turning off the system.

The embodiments as described herein cover the following scenarios:
1) Service is provided only to a first apparatus, being for instance an embedded unit, while a second apparatus, being for instance a mobile device, acts as a cache-and-recover entity (in other words service consumption is only from the embedded unit but the user at some point leaves the proximity of the embedded unit).
2) Service is provided first to a first apparatus, being for instance the embedded unit, and then to a second apparatus, being for instance the mobile unit (session transfer).

The user enters a vehicle such as a car and uses the mobile device (such as a phone) to login and create the secure session. Then they use the security session created that way further in the embedded unit without further need for signing in.

In the following embodiments the following assumptions are made:
There is no transfer of username/passwords between the devices.

Both the first apparatus and the second apparatus are configured to be connected via a secure channel (for example created by Bluetooth security during the BT pairing process, BT light security or NFC secure channel protocols).

In general, there is no storing of a username/password in the first apparatus, for instance being an embedded unit. This is due to potential security concerns. However, session related information can be stored. For web based systems this session related information would typically be a cookie to identify that the logon/sign on process has been successful.

There is no transferring of application session related information (such as maps) between the first apparatus and the second apparatus, being for instance the embedded unit and the mobile device. In other words the application session related information is stored by the remote server (or is cloud based).

That a security session is transferred/cached based on proximity detection. The transfer may include a cookie or synchronization information on such.

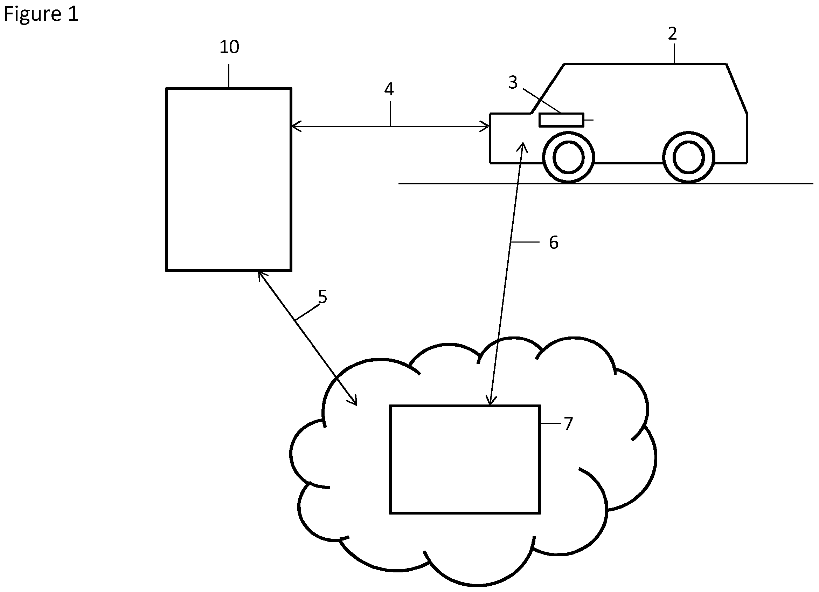

Figure 1 shows a system employed in some embodiments. The second apparatus may be an electronic device (electronic apparatus or user equipment) 10.

The system can comprise a vehicle, which can be a car 2 or any other suitable vehicle such as truck, lorry, auto-bus, boat or other. A first apparatus, for instance an embedded unit 3, may be located within the vehicle, and may be an embedded navigation unit. It is understood that the embedded unit can be any suitable unit configured to retrieve services or data from a remote server. For example in some embodiments the embedded unit 3 can control the in vehicle entertainment system, or vehicle control system and store details concerning the user or user preferences with respect to the vehicle such as seat location and settings, steering or other vehicle environmental control settings (such as amplifier settings, favourite radio settings, climate control settings, seat settings).

The system shown in Figure 1 shows a server 7. The server 7 can in some embodiments be considered to operate within the 'cloud'. In other words the server 7 can be configured to be 'located' as part of the network of computers known as the Internet. Although Figure 1 shows a single server 7 it would be understood that the server 7 can be can considered to represent more than one server or application server suitable for supplying more than one service or information element to the mobile device 10 and/or the vehicle embedded unit 3. In general terms, the server contains the service the user wants to utilize and is required to be authorized to before the server can be used. Furthermore in some embodiments the server 7 represents at least one gateway server such as a single sign on server which enables the electronic device and embedded unit to access more than one service using the same sign in or log in credentials.

In Figure 1 the electronic device 10 can be configured to communicate with the server 7 by a first communication pathway (or suitable communication means) or connection 5. The embedded unit 3 is configured to communicate with the server 7 by a second or further communication pathway (or suitable communication means) or connection 6. In the following examples, each of the first and second communication pathways between the electronic device 10 or the embedded unit 3 and the server 7 is at least partially over the wireless cellular telecommunications network. However any suitable wireless communications network can be used.

Furthermore, as shown in Figure 1, there is a communications pathway (or suitable communication means) 4 or connection between the electronic device 10 and the embedded unit 3. The communications pathway 4 between the electronic device 10 and the embedded unit 3 can be any suitable secure communications pathway. In the following examples the communications pathway 4 between the electronic device 10 and the embedded unit 3 is a secure Bluetooth connection however any suitable communications link (either wired, wireless or a combination of both) between the electronic device 10 and embedded unit 3 can be used. For example in some embodiments the communications pathway 4 between the electronic device 10 and the embedded unit 3 is a near field communication (NFC) link, Bluetooth, BT light or WLAN.

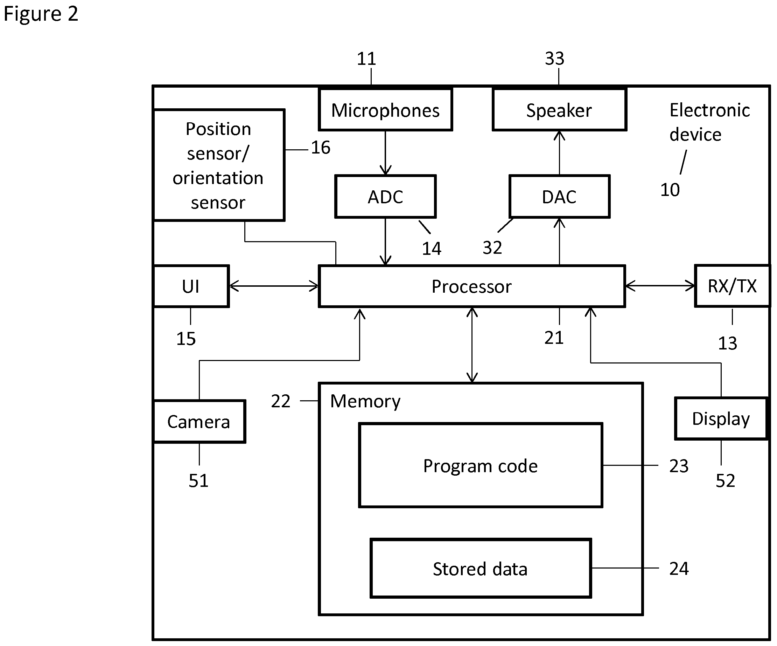

Figure 2 shows a second apparatus employed in some embodiments, being for instance a mobile device (or apparatus or electronic device) 10, which may be used as for example as a navigation system.

The mobile device 10 may for example be a mobile terminal or user equipment of a wireless communication system. In some embodiments the apparatus can be a satellite navigation device commonly known as a GPS. However, it would be understood that the mobile device or apparatus can be implemented within any suitable audio player or audio recorder, such as an MP3 player, a media recorder/player (also known as an MP4 player), or any suitable portable apparatus suitable for generating audio signals.

The mobile device or apparatus 10 can in some embodiments comprise an audio-video subsystem. The audio-video subsystem for example can comprise in some embodiments a microphone or array of microphones 11 for audio signal capture. In some embodiments the microphone or array of microphones can be a solid state microphone, in other words capable of capturing audio signals and outputting a suitable digital format signal. In some other embodiments the microphone or array of microphones 11 can comprise any suitable microphone or audio capture means, for example a condenser microphone, capacitor microphone, electrostatic microphone, Electret condenser microphone, dynamic microphone, ribbon microphone, carbon microphone, piezoelectric microphone, or micro electrical-mechanical system (MEMS) microphone. In some embodiments the microphone 11 is a digital microphone array, in other words configured to generate a digital signal output (and thus not requiring an analogue-to-digital converter). The microphone 11 or array of microphones can in some embodiments output the audio captured signal to an analogue-to-digital converter (ADC) 14.

In some embodiments the mobile device or apparatus can further comprise an analogue-to-digital converter (ADC) 14 configured to receive the analogue captured audio signal from the microphones and outputting the audio captured signal in a suitable digital form. The analogue-to-digital converter 14 can be any suitable analogue-to-digital conversion or processing means. In some embodiments the microphones are 'integrated' microphones containing both audio signal generating and analogue-to-digital conversion capability.

In some embodiments the mobile device or apparatus 10 audio-video subsystem further comprises a digital-to-analogue converter 32 for converting digital audio signals from a processor 21 to a suitable analogue format. The digital-to-analogue converter (DAC) or signal processing means 32 can in some embodiments be any suitable DAC technology.

Furthermore the audio-video subsystem can comprise in some embodiments a speaker or speakers 33. The speaker or speakers 33 can in some embodiments receive the output from the digital-to-analogue converter 32 and present the analogue audio signal to the user. The speaker or speakers 33 can be any suitable audio transducer system configured to generate acoustic waves which can produce virtual sound images in various directions. In some embodiments the speaker or speakers 33 can be representative of an audio output configured to output a suitable audio signal format. For example the speaker 33 can be representative of an audio output to a multi-speaker arrangement (such as a car audio system), a headset (for example a set of headphones, or cordless headphones). The audio output can be any suitable audio output, for example a wired connection (audio jack, usb connection) or a wireless connection (such as a suitable universal mobile telecommunications system (UMTS) protocol, Long Term Evolution (LTE), a wireless local area network (WLAN) protocol such as for example IEEE 802.X, a suitable short-range radio frequency communication protocol such as Bluetooth, or infrared data communication pathway (IRDA)).

In some embodiments the mobile device or apparatus audio-video subsystem comprises a camera 51 or image capturing means configured to supply to the processor 21 image data. In some embodiments the camera can be configured to supply multiple images over time to provide a video stream.

In some embodiments the mobile device or apparatus audio-video subsystem comprises a display 52. The display or image display means can be configured to output visual images which can be viewed by the user of the apparatus. In some embodiments the display can be a touch screen display suitable for supplying input data to the apparatus. The display can be any suitable display technology, for example the display can be implemented by a flat panel comprising cells of LCD, LED, OLED, or 'plasma' display implementations.

Although the mobile device or apparatus 10 is shown having both audio/video capture and audio/video presentation components, it would be understood that in some embodiments the apparatus 10 can comprise the audio presentation parts of the audio subsystem only such that in some embodiments the speaker (for audio presentation) is present. Similarly in some embodiments the apparatus 10 can comprise the video presentation parts of the video subsystem only such that in some embodiments the display 52 (for video presentation) is present.

In some embodiments the mobile device or apparatus 10 comprises a processor 21. The processor 21 is coupled to the audio-video subsystem and specifically in some examples the analogue-to-digital converter 14 for receiving digital signals representing audio signals from the microphone 11, the digital-to-analogue converter (DAC) 12 configured to output processed digital audio signals, the camera 51 for receiving digital signals representing video signals, and the display 52 configured to output processed digital video signals from the processor 21.

The processor 21 can be configured to execute various program codes. The implemented program codes can comprise the companion application which the user can use when outside of the vehicle.

In some embodiments the mobile device or apparatus further comprises a memory 22. In some embodiments the processor is coupled to memory 22. The memory can be any suitable storage means. In some embodiments the memory 22 comprises a program code section 23 for storing program codes implementable upon the processor 21. Furthermore in some embodiments the memory 22 can further comprise a stored data section 24 for storing data, for example navigation data. The implemented program code stored within the program code section 23, and the data stored within the stored data section 24 can be retrieved by the processor 21 whenever needed via the memory-processor coupling.

In some further embodiments the mobile device or apparatus 10 can comprise a user interface 15. The user interface 15 can be coupled in some embodiments to the processor 21. In some embodiments the processor can control the operation of the user interface and receive inputs from the user interface 15. In some embodiments the user interface 15 can enable a user to input commands to the electronic device or apparatus 10, for example via a keypad, and/or to obtain information from the apparatus 10, for example via a display which is part of the user interface 15. The user interface 15 can in some embodiments as described herein comprise a touch screen or touch interface capable of both enabling information to be entered to the apparatus 10 and further displaying information to the user of the apparatus 10.

In some embodiments the mobile device or apparatus further comprises a transceiver 13, the transceiver in such embodiments can be coupled to the processor and configured to enable a communication with other apparatus or electronic devices, for example via a wireless communications network. The transceiver 13 or any suitable transceiver or transmitter and/or receiver means can in some embodiments be configured to communicate with other electronic devices or apparatus via a wire or wired coupling or connection.

The transceiver 13 can communicate with further apparatus by any suitable known communications protocol, for example in some embodiments the transceiver 13 or transceiver means can use a suitable universal mobile telecommunications system (UMTS) protocol, LTE, a wireless local area network (WLAN) protocol such as for example IEEE 802.X, a suitable short-range radio frequency communication protocol such as Bluetooth, or infrared data communication pathway (IRDA).

In some embodiments the mobile device or apparatus comprises a position sensor 16 configured to estimate the position of the apparatus 10. The position sensor 16 can in some embodiments be a satellite positioning sensor such as a GPS (Global Positioning System), GLONASS or Galileo receiver.

In some embodiments the positioning sensor can be a cellular ID system or an assisted GPS system.

In some embodiments the mobile device or apparatus 10 further comprises a direction or orientation sensor. The orientation/direction sensor can in some embodiments be an electronic compass, accelerometer, and a gyroscope or be determined by the motion of the apparatus using the positioning estimate.

It is to be understood again that the structure of the electronic device 10 could be supplemented and varied in many ways.

It would be understood that the embedded unit 3 can comprise many of the components as described herein with respect to the mobile device or apparatus 10. The embedded unit 3 can in some embodiments comprise an audio-video subsystem such as described in detail herein with respect to the mobile device 10. The audio-video subsystem for example can comprise in some embodiments a microphone or array of microphones for audio signal capture. In some embodiments the microphone or array of microphones can be a solid state microphone, in other words capable of capturing audio signals and outputting a suitable digital format signal. In some other embodiments the microphone or array of microphones can comprise any suitable microphone or audio capture means, for example a condenser microphone, capacitor microphone, electrostatic microphone, Electret condenser microphone, dynamic microphone, ribbon microphone, carbon microphone, piezoelectric microphone, or micro electrical-mechanical system (MEMS) microphone. In some embodiments the microphone is a digital microphone array, in other words configured to generate a digital signal output (and thus not requiring an analogue-to-digital converter). The microphone or array of microphones can in some embodiments output the audio captured signal to an analogue-to-digital converter (ADC).

In some embodiments the embedded unit 3 can further comprise an analogue-to-digital converter (ADC) configured to receive the analogue captured audio signal from the microphones and outputting the audio captured signal in a suitable digital form. The analogue-to-digital converter can be any suitable analogue-to-digital conversion or processing means. In some embodiments the microphones are 'integrated' microphones containing both audio signal generating and analogue-to-digital conversion capability.

In some embodiments the embedded unit 3 audio-video subsystem further comprises a digital-to-analogue converter for converting digital audio signals from a processor to a suitable analogue format. The digital-to-analogue converter (DAC) or signal processing means can in some embodiments be any suitable DAC technology.

Furthermore the audio-video subsystem can comprise in some embodiments a speaker or speakers. The speaker or speakers can in some embodiments receive the output from the digital-to-analogue converter and present the analogue audio signal to the user. The speaker or speakers can be any suitable audio transducer system configured to generate acoustic waves which can produce virtual sound images in various directions. In some embodiments the speaker or speakers can be representative of an audio output configured to output a suitable audio signal format. For example the speaker can be representative of an audio output to a multi-speaker car audio system.

In some embodiments the embedded unit 3 audio-video subsystem comprises a display. The display or image display means can be configured to output visual images which can be viewed by the user of the embedded unit 3. In some embodiments the display can be a touch screen display suitable for supplying input data to the embedded unit 3. The display can be any suitable display technology, for example the display can be implemented by a flat panel comprising cells of LCD, LED, OLED, or 'plasma' display implementations.

In some embodiments the embedded unit 3 comprises at least one processor. The processor is coupled to the audio-video subsystem and specifically in some examples the analogue-to-digital converter for receiving digital signals representing audio signals from the microphone, the digital-to-analogue converter (DAC) configured to output processed digital audio signals, and the display configured to output processed digital video signals from the at least one processor.

The at least one processor can be configured to execute various program codes. The implemented program codes can comprise the navigation or generally the service application which the user can use when inside the vehicle.

In some embodiments the embedded unit 3 further comprises a memory. In some embodiments the processor is coupled to memory. The memory can be any suitable storage means. In some embodiments the memory comprises a program code section for storing program codes implementable upon the processor, such as the service application. Furthermore in some embodiments the memory can further comprise a stored data section for storing data, for example navigation data. The implemented program code stored within the program code section, and the data stored within the stored data section can be retrieved by the processor whenever needed via the memory-processor coupling.

In some further embodiments the embedded unit 3 can comprise a user interface. The user interface can be coupled in some embodiments to the processor. In some embodiments the processor can control the operation of the user interface and receive inputs from the user interface. In some embodiments the user interface can enable a user to input commands to the embedded unit 3, for example via a keypad, and/or to obtain information from the embedded unit 3, for example via a display which is part of the user interface. The user interface can in some embodiments as described herein comprise a touch screen or touch interface capable of both enabling information to be entered to the embedded unit 3 and further displaying information to the user of the embedded unit 3.

In some embodiments the embedded unit 3 further comprises a transceiver, the transceiver in such embodiments can be coupled to the processor and configured to enable a communication with other apparatus or electronic devices, for example via a wireless communications network. The transceiver or any suitable transceiver or transmitter and/or receiver means can in some embodiments be configured to communicate with other electronic devices or apparatus via a wire or wired coupling or connection or in general, pairing mechanism.

The transceiver can communicate with further apparatus by any suitable known communications protocol, for example in some embodiments the transceiver or transceiver means can use a suitable universal mobile telecommunications system (UMTS) protocol, LTE, a wireless local area network (WLAN) protocol such as for example IEEE 802.X, a suitable short-range radio frequency communication protocol such as Bluetooth, or infrared data communication pathway (IRDA).

In some embodiments the embedded unit 3 comprises a position sensor configured to estimate the position of the embedded unit 3. The position sensor can in some embodiments be a satellite positioning sensor such as a GPS (Global Positioning System), GLONASS or Galileo receiver.

In some embodiments the positioning sensor can be a cellular ID system or an assisted GPS system.

In some embodiments the embedded unit 3 further comprises a direction or orientation sensor. The orientation/direction sensor can in some embodiments be an electronic compass, accelerometer, and a gyroscope or be determined by the motion of the embedded unit 3 using the positioning estimate.

It is to be understood again that the structure of the embedded unit 3 could be supplemented and varied in many ways.

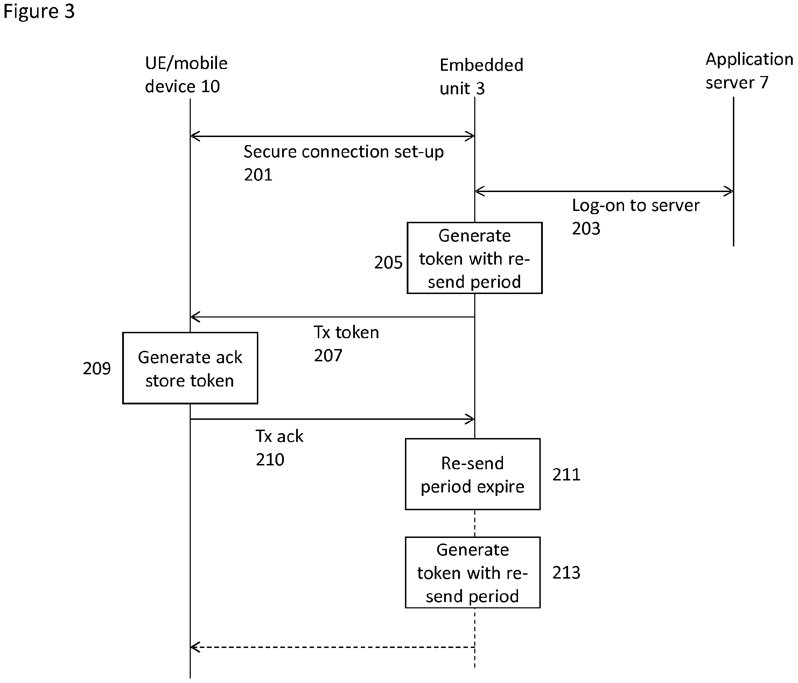

Figure 3 shows a flow diagram of the interactions and operations for transferring session information according to some embodiments. It shows the electronic device 10, embedded unit 3 and application server 7 with respect to a successful setting up of session information transfer operations where the service consumption is only from the embedded unit and the mobile device is configured to operate as a cache-and-recover entity. The the user equipment/mobile device 10 is located proximate (or nearby or neighbouring) to the embedded unit 3. For example, the user of the mobile device 10 can enter the vehicle and place the mobile device 10 on a suitable holder or locating means within the vehicle (or just located in a pocket or bag owned by the user). The mobile device being proximate to the embedded unit 3 can be configured to determine or detect that at least one of the embedded unit 3 or mobile device 10 are within communication range.

The mobile device 10 and the embedded unit 3 are then configured to set up a secure connection between them. This secure connection can for example be a Bluetooth pairing process or a near field communication (NFC) security channel protocol.

The operation of setting up a secure connection between the embedded unit 3 and the mobile device 10 is shown in Figure 3 by step 201.

The embedded unit 3 then can be configured to perform a login or signing in operation with respect to the application server 7. This login or signing in operation can be performed according to any suitable manner. For example in some embodiments the embedded unit 3 can be configured to interrogate the mobile device 10 to determine whether or not the mobile device is signed in to the application server 7. For example in some embodiments the companion application running on the mobile device 10 can communicate with the application server and log the user of the mobile device 10 in with the application server 7. The embedded unit 3 can then log in to the server 7 using an identifier from the mobile device. For example in some embodiments the mobile device passes an international mobile subscriber identity (IMSI) or associated authentication information to the embedded unit which can use such information to authenticate the embedded unit as being operated by the user at the application server.

The operation of logging in to the server from the embedded unit to the application server is shown in Figure 3 by step 203.

The embedded unit 3 is configured to then access the application server 7 and so the service application within the embedded unit can perform the required tasks, such as navigation of the vehicle according to stored navigation locations 'stored originally' by the application server 7. In other words, in such embodiments the application server 7 is configured to provide service information to the embedded unit 3, where the service information enables the embedded unit 3 to perform a 'secure session' of the service.

Once the embedded unit has logged in to the application server 7 then the embedded unit can be configured to generate a token comprising an expiry timer. The token furthermore can in some embodiments be further generated with a known generation or resend period. In some embodiments the token can be considered to be the session information as discussed herein which is transferred between the first apparatus (which in this embodiment is the embedded navigation unit) and the second apparatus (which in this embodiment is the mobile device).

The operation of generating a token is shown in Figure 3 by step 205.

The embedded unit 3 can then be configured in some embodiments to transmit the token to the mobile device 10.

The operation of transmitting the token from the embedded unit 3 to the mobile device 10 is shown in Figure 3 by step 207.

The mobile device 10 can be configured to receive the token, storing the token information and generating an acknowledgement message in response to the token.

The operation of storing the token and generating the acknowledgement message is shown in Figure 3 by step 209.

The mobile device can then in some embodiments be configured to attempt to transmit or pass the acknowledgement message back to the embedded unit 3.

The operation of transmitting the acknowledgement message from the mobile device to the embedded unit 3 is shown in Figure 3 by step 210.

As described herein the embedded unit can be configured to receive the acknowledgement message and further configured to reset the expiry timer on receipt of the acknowledgement message.

The embedded unit can furthermore be configured to monitor the time since the last token has been generated and therefore determine when the period since the last token is greater than a resend or regenerate token period.

The operation of determining when the resend period has expired is shown in Figure 3 by step 211.

Once the resend period had expired the embedded unit 3 in some embodiments can be configured to generate a further token with a further expiry period and a further resend period which can then be transmitted to the mobile device 10.

The operation of generating the further token is shown in Figure 3 by step 213.

Thus whilst the mobile device 10 is in proximity to the embedded unit 3 a series of tokens and acknowledgements are exchanged between the embedded unit and the mobile device and whilst this occurs then the embedded unit maintains the active session with the application server. In other words whilst the user is in proximity with the embedded unit then the session is maintained and the embedded unit is able to 'consume' services from the application server.

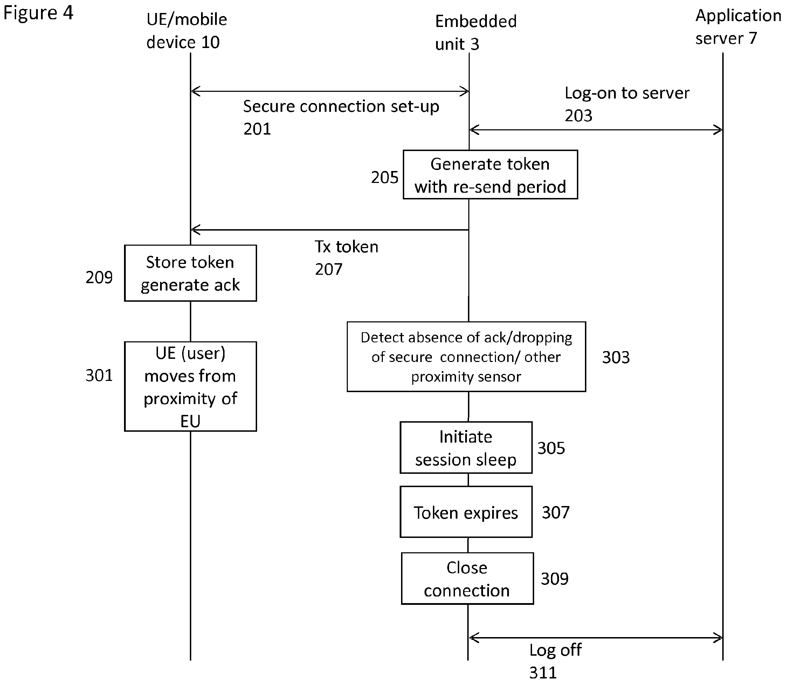

With respect to Figure 4 a continuation of the operation where the service consumption is only from the embedded unit and the mobile device acts as a cache and recover entity is shown where the user (user equipment/mobile device) moves from the proximity of the embedded unit is shown. In other words the operations of Figure 4 show the operation of embodiments shown in Figure 3 where the user gets out of the vehicle as some point. In these embodiments the user equipment (user) moves from proximity of the embedded unit, the secure connection between the mobile device and the embedded unit fails, the mobile device is unable to transmit the acknowledgement message generated to the embedded unit and reacts to this absence of acknowledgement messages.

In other words in some embodiments the user equipment/mobile device 10 is located proximate (or nearby or neighbouring) to the embedded unit 3. For example the user of the mobile device 10 can enter the vehicle and place the mobile device 10 on a suitable holder or locating means within the vehicle (or just located in a pocket or bag owned by the user). The mobile device being proximate to the embedded unit 3 can be configured to determine or detect that at least one of the embedded unit 3 or mobile device 10 are within communication range.

The mobile device 10 and the embedded unit 3 can then be configured to set up a secure connection between them. This secure connection can for example be a Bluetooth pairing process or a near field communication (NFC) security channel protocol, but also other secure pairing methods are possible.

The operation of setting up a secure connection between the embedded unit 3 and the mobile device 10 is shown in Figure 4 by step 201.

The embedded unit 3 then can be configured to perform a login or signing in operation with respect to the application server 7. This login or signing in operation can be performed according to any suitable manner. For example in some embodiments the embedded unit 3 can be configured to interrogate the mobile device 10 to determine whether or not the mobile device is signed in to the application server 7. For example in some embodiments the companion application running on the mobile device 10 can communicate with the application server and log the user of the mobile device 10 in with the application server 7. The embedded unit 3 can then log in to the server 7 using an identifier from the mobile device. For example in some embodiments the mobile device passes an international mobile subscriber identity (IMSI) or associated authentication information to the embedded unit which can use such information to authenticate the embedded unit as being operated by the user at the application server.

The operation of logging in to the server from the embedded unit to the application server is shown in Figure 4 by step 203.

The embedded unit 3 is configured to then access the application server 7 and so the service application within the embedded unit can perform the required tasks, such as navigation of the vehicle according to stored navigation locations 'stored originally' by the application server 7.

Once the embedded unit has logged in to the application server 7 then the embedded unit can be configured to generate a token comprising an expiry timer. The token furthermore can in some embodiments be further generated with a known generation or resend period.

The operation of generating a token is shown in Figure 4 by step 205.

The embedded unit 3 can then be configured in some embodiments to transmit the token to the mobile device 10.

The operation of transmitting the token from the embedded unit 3 to the mobile device 10 is shown in Figure 4 by step 207.

The mobile device 10 can be configured to receive the token, storing the token information and generating an acknowledgement message in response to the token.

The operation of storing the token and generating the acknowledgement message is shown in Figure 4 by step 209.

It is at this point in the flow diagram that the user equipment or user moves away from the embedded unit.

The operation of the user equipment or user moving away from the proximity of the embedded unit is shown in Figure 4 by step 301.

The embedded unit 3 can thus detect the absence of the acknowledgement and interpret this as an absence of proximity of the mobile device to the embedded unit.

However it would be understood that in some embodiments the embedded unit 3 can determine the proximity or absence of proximity of the mobile device in any suitable way. For example in some embodiments the embedded unit can determine the dropping of the secure connection between the mobile device 10 and the embedded unit 3 as the mobile device moves from the proximity of the embedded unit 3.

Furthermore in some embodiments the embedded unit 3 can be coupled to a suitable sensor within the vehicle. For example the vehicle can be equipped or comprise door sensors configured to monitor when the doors are opened or closed, seat sensors determining when the seat is sat on or empty, or infrared or ultrasound motion sensors determining whether there are occupants within the seats of the vehicle.

The detection or determination of an absence of proximity, such as detecting the absence of the acknowledgement message or the dropping of the secure connection, strength of radio signal or any other suitable proximity sensor is shown in Figure 4 by step 303.

The embedded unit 3 having determined or detected an absence of the proximity of the user (mobile device or user equipment) can then initiate a session sleep operation in other words access to the service session is paused from the embedded unit 3.

The operation of initiating a session sleep based on the determined or detected absence of the proximity of the mobile device is shown in Figure 4 by step 305.

In some embodiments the token sent to the user equipment or mobile device 10 (or attempted to be sent to the mobile device/user equipment 10) can comprise an expiry parameter or lifetime period. When the token lifetime or expiry period is reached then the embedded unit 3 can close the connection with the application server 7.

The operation of determining when the token expires is shown in Figure 4 by step 307.

Furthermore the operation of closing the connection is shown in Figure 4 by step 309.

The closing of the connection can in some embodiments cause the embedded unit 3 to log off the embedded unit at the application server.

The operation of logging off or signing off the embedded unit at the application server 7 is shown in Figure 4 by step 311.

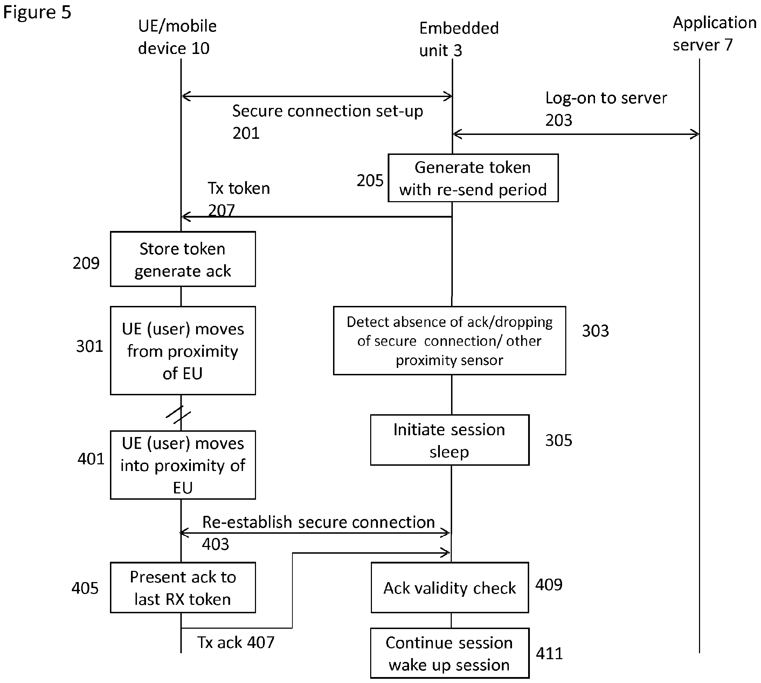

With respect to Figure 5 the example operations shown in Figure 3 and 4 are further explored. Figure 5 in particular shows the successful re-establishment of a session in comparison to Figure 4 showing a failure of the re-establishment of a session (and the resultant closing of the session).

Thus Figure 5 is similar to Figure 4 up to the operation of the embedded unit initiating a session sleep or pause operation.

As such Figure 5 shows:
the operation of setting up a secure connection between the embedded unit 3 and the mobile device 10 in step 201;
the operation of logging in to the server from the embedded unit to the application server is shown in step 203;
the operation of generating a token in step 205;
the operation of transmitting the token from the embedded unit 3 to the mobile device 10 in step 207.
the operation of storing the token and generating the acknowledgement message in step 209;
the operation of the user equipment or user moving away from the proximity of the embedded unit in step 301;
the detection or determination of an absence of proximity, such as detecting the absence of the acknowledgement message or the dropping of the secure connection, strength of radio signal or any other suitable proximity sensor in step 303 and
the operation of the embedded unit initiating a session sleep or pause operation in step 305.

At a time before the expiry of the token timer at the embedded unit but following the initiation of the session sleep by the embedded unit 3 the mobile device or user equipment moves back into proximity with the embedded unit (in other words the user re-enters the vehicle).

The operation of the mobile device moving back into proximity of the embedded unit is shown in Figure 5 by step 401.

The mobile device having moved back into proximity with the embedded unit then attempts to re-establish a secure connection with the embedded unit. The re-establishment (in a manner similar to the initial establishment) is initiated by either or both of the embedded unit and the mobile device.

The setting up or re-establishment of a secure connection between the mobile device 10 and the embedded unit 3 is shown in Figure 5 by step 403.

Once the mobile device 10 has entered into a secure connection with the embedded unit 3 then the mobile device can in some embodiments be configured to generate or regenerate a message comprising the last received token identifier. In some embodiments this message can comprise generating (and attempting to transmit) an acknowledgement message based on the acknowledgement message generated (but failed to deliver) following receiving the last received session token message.

The operation of presenting or regenerating an acknowledgement to the last received token is shown in Figure 5 by step 405.

The mobile device 10 can then in some embodiments transmit the acknowledgement message (or other message comprising the token identifier) to the embedded unit 3.

The operation of transmitting the acknowledgement message (or other message) from the mobile device 10 to the embedded unit 3 is shown in Figure 5 by step 407.

In some embodiments the embedded unit following the re-establishment of the secure connection and receiving the acknowledgement message comprising the token identifier information can then be configured to perform an acknowledgement validity check.

The acknowledgement validity check can in some embodiments comprise checking the acknowledgement message identification value against the last transmitted token to the mobile device and a determination of whether the acknowledgement message is valid with respect to the transmitted token.

The operation of checking the validity of the acknowledgement received is shown in Figure 5 by step 409.

Where the embedded unit determines that the acknowledgement is valid then the embedded unit can continue the paused or 'sleeping' session. Or in other words the embedded unit can wake up the session from its sleep mode.

The continuing of the session or waking up of the session is shown in Figure 5 by step 411.

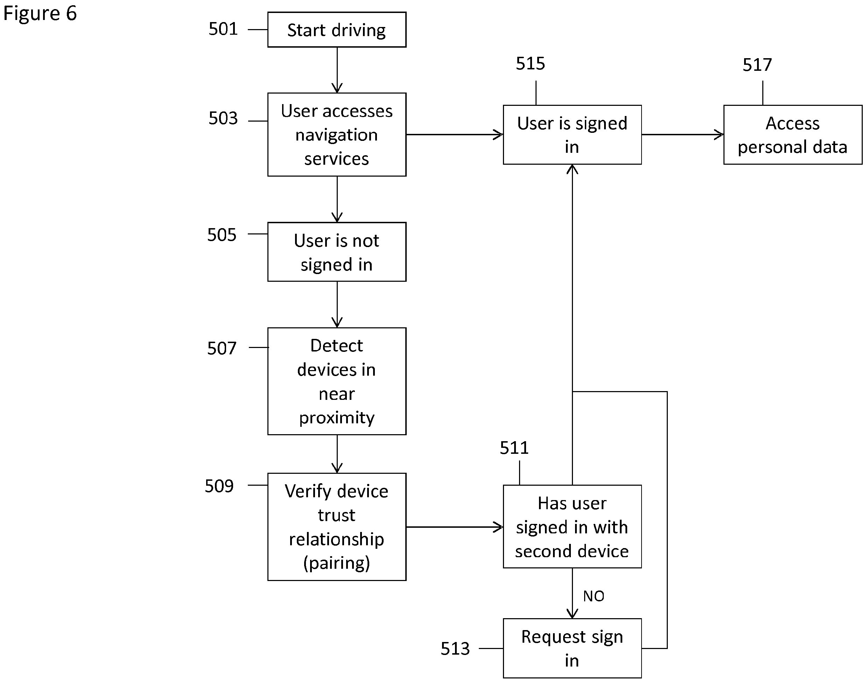

With respect to Figure 6 an example operation of the embedded unit 3 logging onto to the application server 7 when the mobile device 10 is in proximity with the embedded unit 3 such as shown in Figures 3 to 5 is described in further detail. In other words the user is able to use a first device, the embedded unit 3, to log onto a further device, the application server 7, whilst carrying or having in the proximity of the first device a second device, which could be the mobile device 10. However it would be understood that in some situations the first device could be the mobile device and the second device the embedded unit where for example the user is moving from the vehicle comprising the embedded unit and wishes to continue or perform a navigation or other service which has been previously accessed or logged onto by the embedded unit 3.

In this example the user enters and starts operating (driving) the vehicle.

The operation of starting to drive the vehicle is shown in Figure 6 by step 501.

At some point the user then attempts to use the embedded unit 3 to access navigation services (as an example of a service accessible from the embedded unit 3).

The operation of initialising the accessing of navigation services is shown in Figure 6 by step 503.

Where the user is determined to be signed in then the operation passes to the embedded navigation unit determining that the user is signed in.

The operation of determining the user is signed in is shown in Figure 6 by step 515.

Once the user has been determined to be signed in then the embedded unit 3 can access personal data from the application server 7.

The operation of accessing personal data from the application server 7 is shown in Figure 6 by step 517.

Where the user has not signed in to the embedded navigation unit or in other words the embedded navigation unit 3 has not signed in the application server 7 using the user's details then the embedded unit 3 can proceed down the first pathway of detecting devices in proximity with the embedded unit.

The operation of determining that the user is not signed in is shown in Figure 6 by step 505.

Where the user is determined to have not been signed in then the embedded unit 3 can be configured to scan or attempt to detect devices in near proximity to the embedded unit 3. The detection of devices in proximity to the embedded unit has been described herein and can for example include the detection of a secure or unsecure communications link, a determination of the presence or absence of messages (such as acknowledgement messages), or from proximity or other sensors monitoring the volume neighbouring the embedded unit.

The operation of detecting devices in proximity to the embedded unit is shown in figure 6 by step 507.

If a device is discovered or detected then the embedded unit 3 can be configured to setup or generate a secure connection to the device in proximity to the embedded unit. In other words the embedded unit and any devices in proximity can be configured to pair themselves together. In some embodiments this pairing comprises a verification or determination that there is a device trust relationship between the embedded unit and the electronic device.

The operation of verifying the trust relationship between the device and embedded unit is shown in Figure 6 by step 509.

Where the pairing has been verified then the embedded unit 3 can determine whether the user has signed in with the device in proximity with the embedded unit. In other words whether the user has logged or signed in using the second device.

The operation of determining whether the user has signed in with the second device is shown in Figure 6 by step 511.

Where the user has signed in with the second device then the embedded unit can attempt to sign in to the application server using some credential provided by the second device.

In other words the operation passes to step 515, the user is signed in and then is able to access personal data as shown with respect to step 517.

In some embodiments the embedded unit 3 can, when determining that the user has not signed in with the second device, request the second device, such as a user equipment or electronic device, to sign in. Typically in such cases the signing in process is an automatic signing in process without requiring user input.

The operation of requesting the electronic device to sign in is shown in Figure 6 by step 513.

Once the request for signing in has been made then the electronic device can provide some credential which is used by the embedded unit to sign in the user with respect to the embedded unit. In other words the operation passes to step 515.

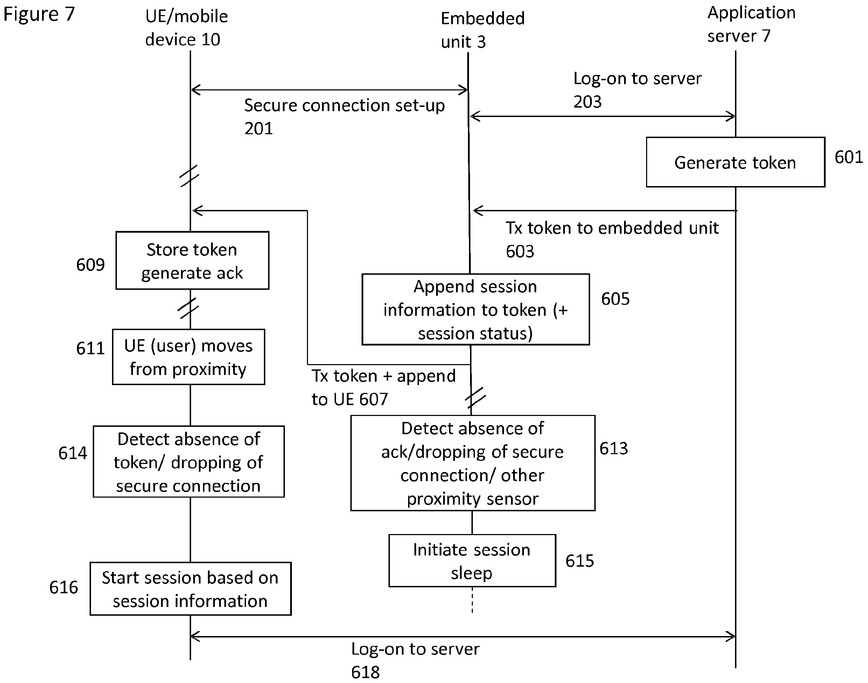

With respect to Figure 7 an example operation of embodiments is shown where the session is transferred from one device to the other.

In the example shown in Figure 7 the embedded unit first operates the session and consumes the services provided by the application server which are then transferred over to the companion application on the mobile device 10 when the user equipment moves from proximity of the embedded unit. For example where the user attempts to navigate to an address, parks the car and still requires to directions to the address on foot.

However it would be understood that in some embodiments this session transfer can occur in the other direction.

The user equipment/mobile device 10 is located proximate (or nearby or neighbouring) to the embedded unit 3. For example the user of the mobile device 10 can enter the vehicle and place the mobile device 10 on a suitable holder or locating means within the vehicle (or just located in a pocket or bag owned by the user). The mobile device being proximate to the embedded unit 3 can be configured to determine or detect that the embedded unit 3 is within communication range.

The mobile device 10 and the embedded unit 3 are configured to then set up a secure connection between them. This secure connection can for example be a Bluetooth pairing process or a near field communication (NFC) security channel protocol or other secure pairing mechanism.

The operation of setting up a secure or otherwise connection between the embedded unit 3 and the mobile device 10 is shown in Figure 7 by step 201.

The embedded unit 3 then can be configured to perform a login or signing in operation with respect to the application server 7. This login or signing in operation can be performed according to any suitable manner. For example, in some embodiments the embedded unit 3 can be configured to interrogate the mobile device 10 to determine whether or not the mobile device is signed in to the application server 7. For example, in some embodiments the companion application running on the mobile device 10 can communicate with the application server and log the user of the mobile device 10 in with the application server 7. The embedded unit 3 can then log in to the server 7 using an identifier from the mobile device. For example in some embodiments the mobile device passes an international mobile subscriber identity (IMSI) or other mobile identity information or associated authentication information to the embedded unit which can use such information to authenticate the embedded unit as being operated by the user at the application server.

The operation of logging in to the server from the embedded unit to the application server is shown in Figure 7 by step 203.

The embedded unit 3 can then be configured to access the application server 7 and so the service application within the embedded unit can perform the required tasks, such as navigation of the vehicle according to stored navigation locations 'stored originally' by the application server 7.

Once the embedded unit has logged in to the application server 7 then the application server 7 can be configured to generate a token.

The operation of generating a token is shown in Figure 7 by step 601.

The application server 7 can then be configured in some embodiments to transmit the token to the embedded unit 3. In other words the token or session information is transferred between the first apparatus (which in this embodiment is the embedded navigation unit) and the second apparatus (which in this embodiment is the mobile device).

The operation of transmitting the token from the application server 7 to the embedded unit 3 is shown in Figure 7 by step 603.

The embedded unit 3, having received the token can be furthermore be configured to append the token or session information with information suitable for re-establishing a session from a device other than the embedded unit, in other words re-establishing a session 'remotely'. In some further embodiments the embedded unit can be further configured to further append the message with session status information.

The operation of appending session information (and session status information) to the token message is shown in Figure 7 by step 605.

The embedded unit can then be configured to transmit the appended token message to the mobile device 10.

The operation transmitting the appended token message to the mobile device is shown in Figure 7 by step 607.

The mobile device 10 can be configured to receive the appended token message, storing the token and session information and generating an acknowledgement message in response to the appended token message.

The operation of storing the token and session message and generating the acknowledgement message is shown in Figure 7 by step 609.

It is at this point in the example flow diagram that the user equipment or user moves away from the embedded unit.

The operation of the user equipment or user moving away from the proximity of the embedded unit is shown in Figure 7 by step 611.

The embedded unit 3 detects the absence of the acknowledgement and interprets this as an absence of proximity of the mobile device to the embedded unit.

However, it would be understood that in some embodiments the embedded unit 3 can determine the proximity or absence of proximity of the mobile device in any suitable way. For example, in some embodiments the embedded unit can determine the dropping of the secure connection between the mobile device 10 and the embedded unit 3 as the mobile device moves from the proximity of the embedded unit 3.

Furthermore in some embodiments the embedded unit 3 can be coupled to a suitable sensor within the vehicle. For example, the vehicle can be equipped with or comprise door sensors configured to monitor when the doors are opened or closed, seat sensors determining when the seat is sat on or empty, or infrared or ultrasound motion sensors determining whether there are occupants within the seats of the vehicle.

The detection or determination of an absence of proximity, such as detecting the absence of the acknowledgement message or the dropping of the secure connection or any other suitable proximity sensor, is shown in Figure 7 by step 613.

The embedded unit 3, having determined or detected an absence of the proximity of the user (mobile device or user equipment), initiates a session sleep operation; in other words, access to the service session is paused from the embedded unit 3. The mobile device or user equipment furthermore can be configured to determine that the mobile device or user equipment has moved from proximity of the embedded unit, for example by detecting the dropping of the secure connection between the mobile device and embedded unit or by detecting the absence of the appended token message.

The determination or detection of the absence of tokens or the dropping of the secure connection, thus indicating that the mobile device has moved from the proximity of the embedded unit, is shown in Figure 7 by step 614.

The mobile device then starts a session based on the information provided by the appended token with the appended session information and session status information.

The operation of starting the session based on the session information is shown in Figure 7 by step 616.

Thus in some embodiments the mobile device can attempt to log in to the application server 7.

The operation of logging in to the application server is shown in Figure 7 by step 618.

Following the logging in to the server using the session information the mobile device then continues the session using the companion application running on the mobile device 10 and the data from the application server 7 based on the session information.

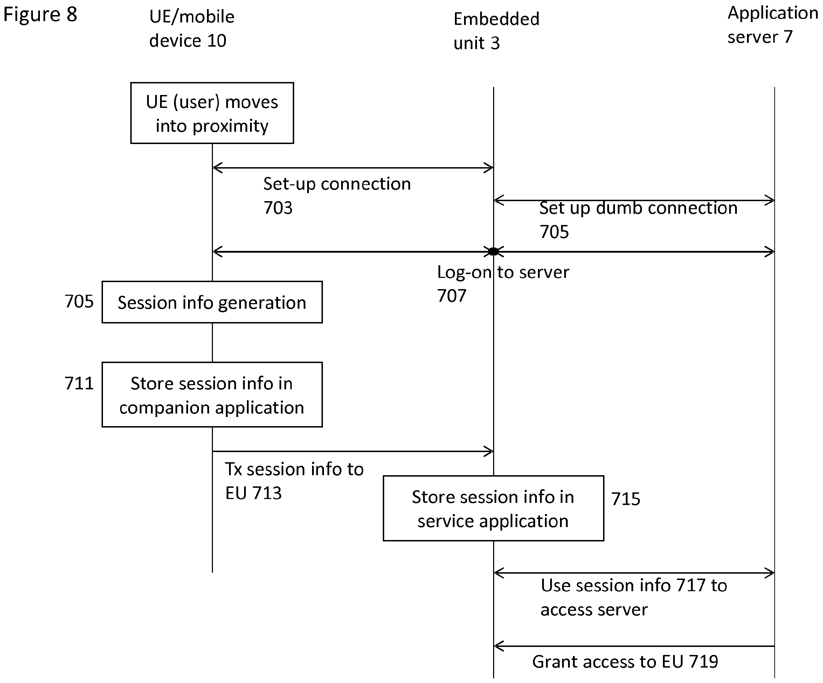

With respect to Figure 8 the flow diagram shows the scenario or example of embodiments where the user initially uses their mobile device to log in and when in proximity with their vehicle uses these security sessions in the embedded unit.

Thus for example the mobile device or user equipment (user) which is already logged into the application server enters the proximity of the embedded unit 3. For example the user opens the car door and enters and sits down in the vehicle.

The operation of the user equipment moving into proximity with the embedded unit is shown in Figure 8 by step 701.

The mobile device 10 then sets up a secure connection with the embedded unit 3.

The operation of setting up the secure connection between the mobile device and embedded unit is shown in Figure 8 by step 703.

Furthermore the embedded unit 3 can then set up a dumb terminal connection with the application server 7 using credentials supplied from the mobile device.

The operation of setting up a dumb connection between the embedded unit and application server 7 is shown in Figure 8 by step 705.

The mobile device can in some embodiments be configured to use the secure connection between the mobile device and embedded unit, and the dumb connection between the embedded unit and application server to log in to the server.

The operation of logging in to the server is shown in Figure 8 by step 707.

The response to the log in request between the mobile device 10 and the application server 7 is such that the application server 7 can provide suitable service information to the mobile device 10 in order that it may perform the required service. Session information is generated within the mobile device 10.

The operation of generating session information is shown in Figure 8 by step 705.

This session information can then be stored in a companion application within the mobile device 10.

The operation of storing the session information in a companion application on the mobile device 10 is shown in Figure 8 by step 711.

The session information can then be further transferred or transmitted to the embedded unit 3 over the connection between the mobile device 10 and the embedded unit 3.

The operation of transferring or transmitting the session information from the mobile device 10 to the embedded unit 3 is shown in Figure 8 by step 713.

The embedded unit 3 having received the session information from the mobile device 10 can be configured to store the session information in the service application part of the embedded unit 3.

The operation of storing the session information in the service application part or section of the embedded unit is shown in Figure 8 by step 715.

The embedded unit 3 then uses this session information to access the application server 7.

The use of the session information to access the application server is shown in Figure 8 by step 717.

The session information can in some embodiments be verified at the application server 7 and the application server 7 can then be configured to grant access of that the services required based on the session information to the embedded unit 3.

The operation of granting access to the embedded unit for the services based on the session information is shown in Figure 8 by step 719.

In the examples described herein this sensor based approach follows the proximity of a single user. However it would be understood that the embodiments described can further be applied to switching between users or user profiles when there are two or more users for same car. For example when person one uses the car a first set of profiles are used and when person two uses the car a second set of profiles are used (for example they have their own cloud based favorite locations saved).

In the examples described herein the token can comprise be a random number, but also may contain specific session information.

It shall be appreciated that the term user equipment is intended to cover any suitable type of wireless user equipment, such as mobile telephones, portable data processing devices or portable web browsers, as well as wearable devices, embedded navigation systems such as in-car integral navigation systems, or any other portable navigation systems. The invention may also be applied to systems like TV session transfer e.g. transferring a mobile TV security session from a phone to a TV screen or beamer and back.

Furthermore elements of a public land mobile network (PLMN) may also comprise apparatus as described above.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention.

## Claims

1. A computer-implemented method comprising:
setting up (201) a connection (4) between a first apparatus (3) and a second apparatus (10) which is in proximity of the first apparatus;
connecting the first apparatus to at least one further apparatus (7) which is remote from the first and second apparatuses and which is configured to provide service information to the first apparatus, the service information being adapted to configure the first apparatus to initiate a secure session with the at least one further apparatus based on the service information;
transferring session information (207; 607) between the first apparatus and the second apparatus over the connection between the first apparatus and the second apparatus, such that the secure session can be transferred/recovered following a pausing of the secure session;
determining (303; 613), at the first apparatus, that the second apparatus is no longer in proximity of the first apparatus;
in response to the determination, pausing the secure session (305; 615) at the first apparatus; and
at least one of:
i. connecting the second apparatus to the at least one further apparatus and continuing the secure session at the second apparatus (616) based on the session information transferred between the first apparatus and the second apparatus, or
ii. determining that the second apparatus is again in proximity of the first apparatus, re-establishing the connection between the first apparatus (3) and the second apparatus (10), transferring session information from the second apparatus to the first apparatus over the re-established connection, and restarting the secure session (411) at the first apparatus based on the transferred session information.

2. The method as claimed in claim 1, comprising:
continuing the secure session at the second apparatus (10) based on the session information transferred between the first apparatus (3) and the second apparatus;
determining, at the first apparatus or the second apparatus, that the second apparatus is again in proximity of the first apparatus;
restarting the secure session at the first apparatus; and
stopping the secure session at the second apparatus.

3. The method as claimed in either of claims 1 to 2, wherein transferring session information between the first apparatus and the second apparatus over the connection between the first apparatus and the second apparatus comprises:
generating a token (205) at the first apparatus, wherein the token is associated with at least one time period;
transmitting periodically (207) the token from the first apparatus to the second apparatus.

4. The method as claimed in claim 3, wherein transferring session information between the first apparatus (3) and the second apparatus (10) further comprises:
receiving the token at the second apparatus;
storing the token in the second apparatus;
generating (209) a token acknowledgement at the second apparatus;
transmitting (210) the token acknowledgement to the first apparatus.

5. The method as claimed in claim 4, wherein transferring session information between the first apparatus (3) and the second apparatus (10) further comprises the first apparatus:
receiving the token acknowledgement;
verifying the token acknowledgement is received within the time period;
resetting the time period.

6. The method as claimed in any of claims 3 to 5, further comprising the first apparatus:
determining a time period expiration (307);
closing the secure session (309).

7. The method as claimed in any of claims 1 to 6, wherein determining, at the first apparatus, that the second apparatus (10) is no longer in proximity of the first apparatus (3) comprises at least one of:
determining the absence of a token acknowledgement;
determining the absence of the connection between the first apparatus and the second apparatus.

8. The method as claimed in any of claims 1 to 7, wherein determining, at the first apparatus, that the second apparatus (10) is no longer in proximity of the first apparatus (3) comprises:
receiving at least one sensor information determining the absence of at least one of:
the second apparatus (10); and a user of the second apparatus.

9. The method as claimed in any of claims 1 to 8, wherein connecting the first apparatus (3) to at least one further apparatus (7), comprises:
determining that the second apparatus (10) is connected (707) to the at least one further apparatus;
transferring at least one credential (713) from the second apparatus to the first apparatus;
connecting (717, 719) the first apparatus to the at least one further apparatus based on the at least one credential.

10. The method as claimed in any of claims 1 to 9, wherein the service information comprises at least one of:
navigation data associated with at least one of the first (3) and second (10) apparatus;
configuration data for a vehicle (2) associated with the first apparatus, wherein the first apparatus comprises an embedded unit within the vehicle;
configuration data for a vehicle entertainment system wherein the first apparatus comprises an embedded vehicle entertainment system;
configuration data for a vehicle control system, wherein the first apparatus comprises an embedded unit within the vehicle.

11. A first apparatus (3) comprising at least one processor and at least one memory including computer program code for one or more programs, the at least one memory and the computer program code configured to, with the at least one processor, cause the first apparatus to:
set up a connection (4) between the first apparatus (3) and a second apparatus (10) which is in proximity of the first apparatus;
connect the first apparatus to at least one further apparatus (7) which is remote from the first apparatus and the second apparatus and which is configured to provide service information to the first apparatus, the service information being adapted to configure the first apparatus to initiate a secure session with the at least one further apparatus based on the service information;
transfer session information between the first apparatus and the second apparatus over the connection between the first apparatus and the second apparatus, such that the secure session can be transferred/recovered following a pausing of the secure session;
determine that the second apparatus is no longer in proximity of the first apparatus;
pause the secure session at the first apparatus, in response to the determination that the second apparatus is no longer in proximity of the first apparatus; determine that the second apparatus is again in proximity of the first apparatus;
re-establish the connection between the first apparatus and the second apparatus;
receive session information from the second apparatus over the re-established connection; and
restart the secure session at the first apparatus, in response to the determination that the second apparatus is again in proximity of the first apparatus and based on the transferred session information.

12. A second apparatus (10) comprising at least one processor and at least one memory including computer program code for one or more programs, the at least one memory and the computer program code configured to, with the at least one processor, cause the second apparatus to:
set up a connection between the second apparatus (10) and a first apparatus (3) which is in proximity of the second apparatus;
determine, via the connection, that the first apparatus is connected to at least one further apparatus (7) which is remote from the first and second apparatuses and which is configured to provide service information to the first apparatus, the service information being adapted to configure the first apparatus to initiate a secure session with the at least one further apparatus based on the service information;
receive session information from the first apparatus over the connection between the first apparatus and the second apparatus, such that the secure session can be transferred/recovered following a pausing of the secure session;
determine that the first apparatus is no longer in proximity of the second apparatus;
connect the second apparatus to the at least one further apparatus; and
continue the secure session at the second apparatus based on the session information received from the first apparatus.

13. A computer program product stored on a medium and configured to cause a first apparatus (3) to:
set up (201) a connection (4) between the first apparatus (3) and a second apparatus (10) which is in proximity of the first apparatus;
connect the first apparatus to at least one further apparatus (7) which is remote from the first and second apparatuses and which is configured to provide service information to the first apparatus, the service information being adapted to configure the first apparatus to
initiate a secure session with the at least one further apparatus based on the service information;
transfer session information (207; 607) between the first apparatus and the second apparatus over the connection between the first apparatus and the second apparatus, such that the secure session can be transferred/recovered following a pausing of the secure session;
determine (303; 613) that the second apparatus is no longer in proximity of the first apparatus;
in response to the determination, pause the secure session (305; 615) at the first apparatus;
determine that the second apparatus is again in proximity of the first apparatus;
re-establish the connection between the first apparatus and the second apparatus;
receive session information from the second apparatus over the re-established connection; and
restart the secure session (411) at the first apparatus in response to the determination that the second apparatus is again in proximity of the first apparatus and based on the transferred session information.

14. A computer program product stored on a medium and configured to cause a second apparatus (10) to:
set up (201) a connection (4) between the second apparatus (10) and a first apparatus (3) which is in proximity of the second apparatus;
determine, via the connection, that the first apparatus is connected to at least one further apparatus (7) which is remote from the first and second apparatuses and which is configured to provide service information to the first apparatus, the service information being adapted to configure the first apparatus to initiate a secure session with the at least one further apparatus based on the service information;
receive session information (207; 607) from the first apparatus over the connection between the first apparatus and the second apparatus, such that the secure session can be transferred/recovered following a pausing of the secure session;
determine (303; 613) that the first apparatus is no longer in proximity of the second apparatus;
connect the second apparatus to the at least one further apparatus; and
continue the secure session at the second apparatus (616) based on the session information received from the first apparatus.

15. A system comprising the first apparatus of claim 11, the second apparatus of claim 12 and the at least one further apparatus, the system configured to perform the method of any preceding method claim.

## Patentansprüche

1. Computerimplementiertes Verfahren, das Folgendes umfasst:
Aufbauen (201) einer Verbindung (4) zwischen einer ersten Vorrichtung (3) und einer zweiten Vorrichtung (10), die sich in der Nähe der ersten Vorrichtung befindet;
Verbinden der ersten Vorrichtung mit wenigstens einer weiteren Vorrichtung (7), die sich von der ersten und der zweiten Vorrichtung entfernt befindet und die konfiguriert ist, um Dienstinformationen an die erste Vorrichtung bereitzustellen, wobei die Dienstinformationen angepasst sind, um die erste Vorrichtung zu konfigurieren, eine sichere Sitzung mit der wenigstens einen weiteren Vorrichtung basierend auf den Dienstinformationen zu initiieren;
Übertragen von Sitzungsinformationen (207; 607) zwischen der ersten Vorrichtung und der zweiten Vorrichtung über die Verbindung zwischen der ersten Vorrichtung und der zweiten Vorrichtung derart, dass die sichere Sitzung nach einem Unterbrechen der sicheren Sitzung übertragen/wiederhergestellt werden kann;
Bestimmen (303; 613), an der ersten Vorrichtung, dass sich die zweite Vorrichtung nicht mehr in der Nähe der ersten Vorrichtung befindet;
als Reaktion auf die Bestimmung, Unterbrechen der sicheren Sitzung (305; 615) an der ersten Vorrichtung; und
Folgendes:
i. Verbinden der zweiten Vorrichtung mit der wenigstens einen weiteren Vorrichtung und Fortsetzen der sicheren Sitzung an der zweiten Vorrichtung (616) basierend auf den Sitzungsinformationen, die zwischen der ersten Vorrichtung und der zweiten Vorrichtung übertragen wurden, und/oder
ii. Bestimmen, dass sich die zweite Vorrichtung wieder in der Nähe der ersten Vorrichtung befindet, Wiederherstellen der Verbindung zwischen der ersten Vorrichtung (3) und der zweiten Vorrichtung (10), Übertragen von Sitzungsinformationen von der zweiten Vorrichtung an die erste Vorrichtung über die wiederhergestellte Verbindung und Neustarten der sicheren Sitzung (411) an der ersten Vorrichtung basierend auf den übertragenen Sitzungsinformationen.

2. Verfahren nach Anspruch 1, das Folgendes umfasst:
Fortsetzen der sicheren Sitzung an der zweiten Vorrichtung (10) basierend auf den Sitzungsinformationen, die zwischen der ersten Vorrichtung (3) und der zweiten Vorrichtung übertragen wurden;
Bestimmen, an der ersten Vorrichtung oder der zweiten Vorrichtung, dass sich die zweite Vorrichtung wieder in der Nähe der ersten Vorrichtung befindet;
Neustarten der sicheren Sitzung an der ersten Vorrichtung; und
Beenden der sicheren Sitzung an der zweiten Vorrichtung.

3. Verfahren nach einem der Ansprüche 1 bis 2, wobei das Übertragen von Sitzungsinformationen zwischen der ersten Vorrichtung und der zweiten Vorrichtung über die Verbindung zwischen der ersten Vorrichtung und der zweiten Vorrichtung Folgendes umfasst:
Erzeugen eines Tokens (205) an der ersten Vorrichtung, wobei das Token wenigstens einer Zeitdauer zugehörig ist;
periodisches Übertragen (207) des Tokens von der ersten Vorrichtung an die zweite Vorrichtung.

4. Verfahren nach Anspruch 3, wobei das Übertragen von Sitzungsinformationen zwischen der ersten Vorrichtung (3) und der zweiten Vorrichtung (10) ferner Folgendes umfasst:
Empfangen des Tokens an der zweiten Vorrichtung;
Speichern des Tokens in der zweiten Vorrichtung;
Erzeugen (209) einer Tokenquittung an der zweiten Vorrichtung;
Übertragen (210) der Tokenquittung an die erste Vorrichtung.

5. Verfahren nach Anspruch 4, wobei das Übertragen von Sitzungsinformationen zwischen der ersten Vorrichtung (3) und der zweiten Vorrichtung (10) ferner umfasst, dass die erste Vorrichtung Folgendes ausführt:
Empfangen der Tokenquittung;
Überprüfen, dass die Tokenquittung innerhalb der Zeitdauer empfangen wird;
Zurücksetzen der Zeitdauer.

6. Verfahren nach einem der Ansprüche 3 bis 5, das ferner umfasst, dass die erste Vorrichtung Folgendes ausführt:
Bestimmen eines Zeitdauerablaufs (307);
Schließen der sicheren Sitzung (309).

7. Verfahren nach einem der Ansprüche 1 bis 6, wobei das Bestimmen, an der ersten Vorrichtung, dass sich die zweite Vorrichtung (10) nicht mehr in der Nähe der ersten Vorrichtung (3) befindet, Folgendes umfasst:
Bestimmen des Fehlens einer Tokenquittung; und/oder
Bestimmen des Fehlens der Verbindung zwischen der ersten Vorrichtung und der zweiten Vorrichtung.

8. Verfahren nach einem der Ansprüche 1 bis 7, wobei das Bestimmen, an der ersten Vorrichtung, dass sich die zweite Vorrichtung (10) nicht mehr in der Nähe der ersten Vorrichtung (3) befindet, Folgendes umfasst:
Empfangen von wenigstens einer Sensorinformation, die das Fehlen von Folgendem bestimmt:
der zweiten Vorrichtung (10); und/oder
einem Benutzer der zweiten Vorrichtung.

9. Verfahren nach einem der Ansprüche 1 bis 8, wobei das Verbinden der ersten Vorrichtung (3) mit wenigstens einer weiteren Vorrichtung (7) Folgendes umfasst:
Bestimmen, dass die zweite Vorrichtung (10) mit der wenigstens einen weiteren Vorrichtung verbunden (707) ist;
Übertragen wenigstens eines Berechtigungsnachweises (713) von der zweiten Vorrichtung an die erste Vorrichtung;
Verbinden (717, 719) der ersten Vorrichtung mit der wenigstens einen weiteren Vorrichtung basierend auf dem wenigstens einen Berechtigungsnachweis.

10. Verfahren nach einem der Ansprüche 1 bis 9, wobei die Dienstinformationen Folgendes umfassen:
Navigationsdaten, die der ersten (3) und/oder der zweiten (10) Vorrichtung zugehörig sind;
Konfigurationsdaten für ein Fahrzeug (2), die der ersten Vorrichtung zugehörig sind, wobei die erste Vorrichtung eine eingebettete Einheit innerhalb des Fahrzeugs umfasst;
Konfigurationsdaten für ein Fahrzeugunterhaltungssystem, wobei die erste Vorrichtung ein eingebettetes Fahrzeugunterhaltungssystem umfasst; und/oder
Konfigurationsdaten für ein Fahrzeugsteuersystem, wobei die erste Vorrichtung innerhalb des Fahrzeugs eine eingebettete Einheit umfasst.

11. Erste Vorrichtung (3), die wenigstens einen Prozessor und wenigstens einen Speicher umfasst, der einen Computerprogrammcode für ein oder mehrere Programme beinhaltet, wobei der wenigstens eine Speicher und der Computerprogrammcode konfiguriert sind, um, mit dem wenigstens einen Prozessor, die erste Vorrichtung zu Folgendem zu veranlassen:
Aufbauen einer Verbindung (4) zwischen der ersten Vorrichtung (3) und einer zweiten Vorrichtung (10), die sich in der Nähe der ersten Vorrichtung befindet;
Verbinden der ersten Vorrichtung mit wenigstens einer weiteren Vorrichtung (7), die sich von der ersten Vorrichtung und der zweiten Vorrichtung entfernt befindet und die konfiguriert ist, um Dienstinformationen an die erste Vorrichtung bereitzustellen, wobei die Dienstinformationen angepasst sind, um die erste Vorrichtung zu konfigurieren, eine sichere Sitzung mit der wenigstens einen weiteren Vorrichtung basierend auf den Dienstinformationen zu initiieren;
Übertragen von Sitzungsinformationen zwischen der ersten Vorrichtung und der zweiten Vorrichtung über die Verbindung zwischen der ersten Vorrichtung und der zweiten Vorrichtung derart, dass die sichere Sitzung nach einem Unterbrechen der sicheren Sitzung übertragen/wiederhergestellt werden kann;
Bestimmen, dass sich die zweite Vorrichtung nicht mehr in der Nähe der ersten Vorrichtung befindet;
Unterbrechen der sicheren Sitzung an der ersten Vorrichtung als Reaktion auf die Bestimmung, dass sich die zweite Vorrichtung nicht mehr in der Nähe der ersten Vorrichtung befindet;
Bestimmen, dass sich die zweite Vorrichtung wieder in der Nähe der ersten Vorrichtung befindet;
Wiederherstellen der Verbindung zwischen der ersten Vorrichtung und der zweiten Vorrichtung;
Empfangen von Sitzungsinformationen von der zweiten Vorrichtung über die wiederhergestellte Verbindung; und
Neustarten der sicheren Sitzung an der ersten Vorrichtung als Reaktion auf die Bestimmung, dass sich die zweite Vorrichtung wieder in der Nähe der ersten Vorrichtung befindet, und basierend auf den übertragenen Sitzungsinformationen.

12. Zweite Vorrichtung (10), die wenigstens einen Prozessor und wenigstens einen Speicher umfasst, der einen Computerprogrammcode für ein oder mehrere Programme beinhaltet, wobei der wenigstens eine Speicher und der Computerprogrammcode konfiguriert sind, um, mit dem wenigstens einen Prozessor, die zweite Vorrichtung zu Folgendem zu veranlassen:
Aufbauen einer Verbindung zwischen der zweiten Vorrichtung (10) und einer ersten Vorrichtung (3), die sich in der Nähe der zweiten Vorrichtung befindet;
Bestimmen, über die Verbindung, dass die erste Vorrichtung mit wenigstens einer weiteren Vorrichtung (7) verbunden ist, die sich von der ersten und der zweiten Vorrichtung entfernt befindet und die konfiguriert ist, um Dienstinformationen an die erste Vorrichtung bereitzustellen, wobei die Dienstinformationen angepasst sind, um die erste Vorrichtung zu konfigurieren, eine sichere Sitzung mit der wenigstens einen weiteren Vorrichtung basierend auf den Dienstinformationen zu initiieren;
Empfangen von Sitzungsinformationen von der ersten Vorrichtung über die Verbindung zwischen der ersten Vorrichtung und der zweiten Vorrichtung derart, dass die sichere Sitzung nach einem Unterbrechen der sicheren Sitzung übertragen/wiederhergestellt werden kann;
Bestimmen, dass sich die erste Vorrichtung nicht mehr in der Nähe der zweiten Vorrichtung befindet;
Verbinden der zweiten Vorrichtung mit der wenigstens einen weiteren Vorrichtung; und
Fortsetzen der sicheren Sitzung an der zweiten Vorrichtung basierend auf den Sitzungsinformationen, die von der ersten Vorrichtung empfangen wurden.

13. Computerprogrammprodukt, das auf einem Medium gespeichert ist und konfiguriert ist, um eine erste Vorrichtung (3) zu Folgendem zu veranlassen:
Aufbauen (201) einer Verbindung (4) zwischen der ersten Vorrichtung (3) und einer zweiten Vorrichtung (10), die sich in der Nähe der ersten Vorrichtung befindet;
Verbinden der ersten Vorrichtung mit wenigstens einer weiteren Vorrichtung (7), die sich von der ersten und der zweiten Vorrichtung entfernt befindet und die konfiguriert ist, um Dienstinformationen an die erste Vorrichtung bereitzustellen, wobei die Dienstinformationen angepasst sind, um die erste Vorrichtung zu konfigurieren, eine sichere Sitzung mit der wenigstens einen weiteren Vorrichtung basierend auf den Dienstinformationen zu initiieren;
Übertragen von Sitzungsinformationen (207; 607) zwischen der ersten Vorrichtung und der zweiten Vorrichtung über die Verbindung zwischen der ersten Vorrichtung und der zweiten Vorrichtung derart, dass die sichere Sitzung nach einem Unterbrechen der sicheren Sitzung übertragen/wiederhergestellt werden kann;
Bestimmen (303; 613), dass sich die zweite Vorrichtung nicht mehr in der Nähe der ersten Vorrichtung befindet;
als Reaktion auf die Bestimmung, Unterbrechen der sicheren Sitzung (305; 615) an der ersten Vorrichtung;
Bestimmen, dass sich die zweite Vorrichtung wieder in der Nähe der ersten Vorrichtung befindet;
Wiederherstellen der Verbindung zwischen der ersten Vorrichtung und der zweiten Vorrichtung;
Empfangen von Sitzungsinformationen von der zweiten Vorrichtung über die wiederhergestellte Verbindung; und
Neustarten der sicheren Sitzung (411) an der ersten Vorrichtung als Reaktion auf die Bestimmung, dass sich die zweite Vorrichtung wieder in der Nähe der ersten Vorrichtung befindet, und basierend auf den übertragenen Sitzungsinformationen.

14. Computerprogrammprodukt, das auf einem Medium gespeichert ist und konfiguriert ist, um eine zweite Vorrichtung (10) zu Folgendem zu veranlassen:
Aufbauen (201) einer Verbindung (4) zwischen der zweiten Vorrichtung (10) und einer ersten Vorrichtung (3), die sich in der Nähe der zweiten Vorrichtung befindet;
Bestimmen, über die Verbindung, dass die erste Vorrichtung mit wenigstens einer weiteren Vorrichtung (7) verbunden ist, die sich von der ersten und der zweiten Vorrichtung entfernt befindet und die konfiguriert ist, um Dienstinformationen an die erste Vorrichtung bereitzustellen, wobei die Dienstinformationen angepasst sind, um die erste Vorrichtung zu konfigurieren, eine sichere Sitzung mit der wenigstens einen weiteren Vorrichtung basierend auf den Dienstinformationen zu initiieren;
Empfangen von Sitzungsinformationen (207; 607) von der ersten Vorrichtung über die Verbindung zwischen der ersten Vorrichtung und der zweiten Vorrichtung derart, dass die sichere Sitzung nach einem Unterbrechen der sicheren Sitzung übertragen/wiederhergestellt werden kann;
Bestimmen (303; 613), dass sich die erste Vorrichtung nicht mehr in der Nähe der zweiten Vorrichtung befindet;
Verbinden der zweiten Vorrichtung mit der wenigstens einen weiteren Vorrichtung; und
Fortsetzen der sicheren Sitzung an der zweiten Vorrichtung (616) basierend auf den Sitzungsinformationen, die von der ersten Vorrichtung empfangen wurden.

15. System, das die erste Vorrichtung nach Anspruch 11, die zweite Vorrichtung nach Anspruch 12 und die wenigstens eine weitere Vorrichtung umfasst, wobei das System konfiguriert ist, um das Verfahren nach einem der vorhergehenden Verfahrensansprüche durchzuführen.

## Revendications

1. Procédé mis en œuvre par ordinateur, comprenant :
l'établissement (201) d'une connexion (4) entre un premier appareil (3) et un second appareil (10) qui se trouve à proximité du premier appareil ;
la connexion du premier appareil à au moins un appareil (7) supplémentaire qui est distant des premier et second appareils et qui est configuré pour fournir des informations de service au premier appareil, les informations de service étant conçues pour configurer le premier appareil afin qu'il lance une session sécurisée à l'aide de l'au moins un appareil supplémentaire sur la base des informations de service ;
le transfert d'informations de session (207 ; 607) entre le premier appareil et le second appareil par la connexion entre le premier appareil et le second appareil, de telle sorte que la session sécurisée peut être transférée/récupérée après une mise en pause de la session sécurisée ;
la détermination (303 ; 613), au niveau du premier appareil, du fait que le second appareil ne se trouve plus à proximité du premier appareil ;
en réponse à la détermination, la mise en pause de la session sécurisée (305 ; 615) au niveau du premier appareil ;
et :
i. la connexion du second appareil à l'au moins un appareil supplémentaire et la poursuite de la session sécurisée au niveau du second appareil (616) sur la base des informations de session transférées entre le premier appareil et le second appareil, et/ou
ii. la détermination du fait que le second appareil se trouve à nouveau à proximité du premier appareil, le rétablissement de la connexion entre le premier appareil (3) et le second appareil (10), le transfert d'informations de session du second appareil au premier appareil par la connexion rétablie, et le redémarrage de la session sécurisée (411) au niveau du premier appareil sur la base des informations de session transférées.

2. Procédé selon la revendication 1, comprenant :
la poursuite de la session sécurisée au niveau du second appareil (10) sur la base des informations de session transférées entre le premier appareil (3) et le second appareil ;
la détermination, au niveau du premier appareil ou du second appareil, du fait que le second appareil se trouve à nouveau à proximité du premier appareil ;
le redémarrage de la session sécurisée au niveau du premier appareil ; et
l'arrêt de la session sécurisée au niveau du second appareil.

3. Procédé selon l'une quelconque des revendications 1 à 2, dans lequel le transfert d'informations de session entre le premier appareil et le second appareil par la connexion entre le premier appareil et le second appareil comprend :
la génération d'un jeton (205) au niveau du premier appareil, le jeton étant associé à au moins une période de temps ;
la transmission périodique (207) du jeton du premier appareil au second appareil.

4. Procédé selon la revendication 3, dans lequel le transfert des informations de session entre le premier appareil (3) et le second appareil (10) comprend en outre :
la réception du jeton au niveau du second appareil ;
le stockage du jeton dans le second appareil ;
la génération (209) d'un accusé de réception de jeton au niveau du second appareil ;
la transmission (210) de l'accusé de réception de jeton au premier appareil.

5. Procédé selon la revendication 4, dans lequel le transfert des informations de session entre
le premier appareil (3) et le second appareil (10) comprend en outre le premier appareil qui :
reçoit l'accusé de réception de jeton ;
vérifie la réception de l'accusé de réception de jeton à l'intérieur de la période de temps ;
réinitialise la période de temps par le premier appareil.

6. Procédé selon l'une quelconque des revendications 3 à 5, comprenant en outre le premier appareil qui :
détermine une expiration de période de temps (307) ;
ferme la session sécurisée (309).

7. Procédé selon l'une quelconque des revendications 1 à 6, dans lequel la détermination, au niveau du premier appareil, du fait que le second appareil (10) ne se trouve plus à proximité du premier appareil (3) comprend :
la détermination de l'absence d'un accusé de réception de jeton ; et/ou
la détermination de l'absence de connexion entre le premier appareil et le second appareil.

8. Procédé selon l'une quelconque des revendications 1 à 7, dans lequel la détermination, au niveau du premier appareil, du fait que le second appareil (10) ne se trouve plus à proximité du premier appareil (3) comprend :
la réception d'au moins une information de capteur déterminant l'absence :
du second appareil (10) ; et/ou d'un utilisateur du second appareil.

9. Procédé selon l'une quelconque des revendications 1 à 8, dans lequel la connexion du premier appareil (3) à au moins un appareil (7) supplémentaire comprend :
la détermination du fait que le second appareil (10) est connecté (707) à l'au moins un appareil supplémentaire ;
le transfert d'au moins un authentifiant (713) du second appareil au premier appareil ;
la connexion (717, 719) du premier appareil à l'au moins un appareil supplémentaire sur la base de l'au moins un authentifiant.

10. Procédé selon l'une quelconque des revendications 1 à 9, dans lequel les informations de service comprennent :
des données de navigation associées au premier (3) et/ou au second (10) appareil ;
des données de configuration pour un véhicule (2) associées au premier appareil, le premier appareil comprenant une unité intégrée à l'intérieur du véhicule ;
des données de configuration pour un système de divertissement pour véhicule, le premier appareil comprenant un système intégré de divertissement pour véhicule ;
des données de configuration pour un système de commande de véhicule, le premier appareil comprenant une unité intégrée à l'intérieur du véhicule.

11. Premier appareil (3) comprenant au moins un processeur et au moins une mémoire comportant un code de programme informatique pour un ou plusieurs programmes, l'au moins une mémoire et le code de programme informatique étant configurés pour, à l'aide de l'au moins un processeur, amener le premier appareil à :
établir une connexion (4) entre le premier appareil (3) et un second appareil (10) qui se trouve à proximité du premier appareil ;
connecter le premier appareil à au moins un appareil (7) supplémentaire qui est distant du premier appareil et du second appareil et qui est configuré pour fournir des informations de service au premier appareil, les informations de service étant conçues pour configurer le premier appareil afin qu'il lance une session sécurisée à l'aide de l'au moins un appareil supplémentaire sur la base des informations de service ;
transférer des informations de session entre le premier appareil et le second appareil par la connexion entre le premier appareil et le second appareil, de telle sorte que la session sécurisée peut être transférée/récupérée après une mise en pause de la session sécurisée ;
déterminer que le second appareil ne se trouve plus à proximité du premier appareil ;
mettre la session sécurisée en pause au niveau du premier appareil, en réponse à la détermination du fait que le second appareil ne se trouve plus à proximité du premier appareil ; déterminer que le second appareil se trouve à nouveau à proximité du premier appareil ;
rétablir la connexion entre le premier appareil et le second appareil ;
recevoir des informations de session du second appareil par la connexion rétablie ; et
redémarrer la session sécurisée au niveau du premier appareil, en réponse à la détermination du fait que le second appareil se trouve à nouveau à proximité du premier appareil et sur la base des informations de session transférées.

12. Second appareil (10) comprenant au moins un processeur et au moins une mémoire comportant un code de programme informatique pour un ou plusieurs programmes, l'au moins une mémoire et le code de programme informatique étant configurés pour, à l'aide de l'au moins un processeur, amener le second appareil à :
établir une connexion entre le second appareil (10) et un premier appareil (3) qui se trouve à proximité du second appareil ;
déterminer, par l'intermédiaire de la connexion, que le premier appareil est connecté à au moins un appareil (7) supplémentaire qui est distant des premier et second appareils et qui est configuré pour fournir des informations de service au premier appareil, les informations de service étant conçues pour configurer le premier appareil afin qu'il lance une session sécurisée à l'aide de l'au moins un appareil supplémentaire sur la base des informations de service ;
recevoir des informations de session du premier appareil par la connexion entre le premier appareil et le second appareil, de telle sorte que la session sécurisée peut être transférée/récupérée après une mise en pause de la session sécurisée ;
déterminer que le premier appareil ne se trouve plus à proximité du second appareil ;
connecter le second appareil à l'au moins un appareil supplémentaire ; et
poursuivre la session sécurisée au niveau du second appareil sur la base des informations de session reçues du premier appareil.

13. Produit-programme informatique stocké sur un support et configuré pour amener un premier appareil (3) à :
établir (201) une connexion (4) entre le premier appareil (3) et un second appareil (10) qui se trouve à proximité du premier appareil ;
connecter le premier appareil à au moins un appareil (7) supplémentaire qui est distant des premier et second appareils et qui est configuré pour fournir des informations de service au premier appareil, les informations de service étant conçues pour configurer le premier appareil afin qu'il lance une session sécurisée à l'aide de l'au moins un appareil supplémentaire sur la base des informations de service ;
transférer des informations de session (207 ; 607) entre le premier appareil et le second appareil par la connexion entre le premier appareil et le second appareil, de telle sorte que la session sécurisée peut être transférée/récupérée après une mise en pause de la session sécurisée ;
déterminer (303 ; 613) que le second appareil ne se trouve plus à proximité du premier appareil ;
en réponse à la détermination, mettre la session sécurisée (305 ; 615) en pause au niveau du premier appareil ;
déterminer que le second appareil se trouve à nouveau à proximité du premier appareil ;
rétablir la connexion entre le premier appareil et le second appareil ;
recevoir des informations de session du second appareil par la connexion rétablie ; et
redémarrer la session sécurisée (411) au niveau du premier appareil, en réponse à la détermination du fait que le second appareil se trouve à nouveau à proximité du premier appareil et sur la base des informations de session transférées.

14. Produit-programme informatique stocké sur un support et configuré pour amener un second appareil (10) à :
établir (201) une connexion (4) entre le second appareil (10) et un premier appareil (3) qui se trouve à proximité du second appareil ;
déterminer, par l'intermédiaire de la connexion, que le premier appareil est connecté à au moins un appareil (7) supplémentaire qui est distant des premier et second appareils et qui est configuré pour fournir des informations de service au premier appareil, les informations de service étant conçues pour configurer le premier appareil afin qu'il lance une session sécurisée à l'aide de l'au moins un appareil supplémentaire sur la base des informations de service ;
recevoir des informations de session (207 ; 607) du premier appareil par la connexion entre le premier appareil et le second appareil, de telle sorte que la session sécurisée peut être transférée/récupérée après une mise en pause de la session sécurisée ;
déterminer (303 ; 613) que le premier appareil ne se trouve plus à proximité du second appareil ;
connecter le second appareil à l'au moins un appareil supplémentaire ; et
poursuivre la session sécurisée au niveau du second appareil (616) sur la base des informations de session reçues du premier appareil.

15. Système comprenant le premier appareil selon la revendication 11, le second appareil selon la revendication 12 et l'au moins un appareil supplémentaire, le système étant configuré pour effectuer le procédé selon l'une quelconque des revendications du procédé précédentes.
